# EUROPEAN PATENT SPECIFICATION

(11) **EP 4 050 986 B1**
(45) Date of publication and mention of the grant of the patent: **03.01.2024**
(21) Application number: 20811441.3
(22) Date of filing: 29.10.2020
(51) Int. Cl.: A01D 45/02

(54) **HEAD ROW ASSEMBLY FOR A MACHINE FOR HARVESTING CROPS IN A FIELD**
KOPFREIHENANORDNUNG FÜR EINE MASCHINE ZUR ERNTE VON ERNTEGUT AUF EINEM FELD
ENSEMBLE DE RANGÉES DE TÊTE POUR UNE MACHINE DE RÉCOLTE DE CULTURES DANS UN CHAMP

(30) Priority: 31.10.2019 IT 201900020120
(43) Date of publication of application: 07.09.2022
(73) Proprietor: Pegaso Srl, 37047 San Bonifacio (IT)
(72) Inventor: NARDI, Alessandro, 36045 LONIGO (IT)
(74) Representative: Modiano, Micaela Nadia
(86) International application number: PCT/IB2020/060155
(87) International publication number: WO 2021/084467

(56) References cited:
- EP-A1- 1 133 911
- EP-A1- 2 335 470
- EP-A1- 2 898 763
- US-A1- 2017 238 467
- US-B1- 6 237 312

## Description

The present invention relates to a head row assembly for machines for harvesting crops in a field.

Machines for harvesting crops in a field are known, such as for example combine harvester or the like, which are constituted by a vehicle, which is movable on the field along an advancement direction and supports, in its frontal part, with respect to its advancement direction a head which extends transversely to the advancement direction of the machine and allows to harvest crops from the field grown in mutually parallel rows (see EP 2 335 470 A1).

In particular, the heads of machines of this type have, along their extension, a plurality of pick-up units or row assemblies, each of which consists of a respective frame which forms a longitudinal passage, extending substantially parallel to the advancement direction of the machine and designed to receive, as the machine advances on the field, the crops of a corresponding row.

Cutting means operate along the passage of each row assembly and cut the stems of the crops in order to remove them from the field. Said cutting means are usually constituted by a pair of cutting discs, which are mounted so that they can rotate on the frame of the corresponding row assembly so that their axes are substantially mutually parallel and are mutually superimposed with a portion thereof arranged at the corresponding passage.

Along the opposite longitudinal edges of the passage of each row assembly, moreover, there is a pair of opposite conveyor elements, which engage the crops that have entered the passage in order to push them, in the opposite direction with respect to the advancement direction of the machine, toward a conveyance channel, which extends along the head and communicates with the exit end of the passages of the various row assemblies.

Typically, said conveyor elements are constituted by two chains closed in a loop, optionally provided with teeth arranged in mutually offset positions. The two chains run continuously between a pair of pulleys, which delimit, for each chain, a respective active portion which extends along a corresponding longitudinal edge of the respective passage.

The frame of each row assembly forms, along the corresponding passage and downstream of the corresponding cutting means, along the direction of motion imparted to the crops by the conveyor elements, a respective sliding surface for the cut crops, which is engaged slidingly by the cut end of the stem of the cut crops, during the advancement of the cut crops toward the conveyance channel.

In known machines, the crops entrained by the conveyor elements tend to strike, during their movement from the cutting means to the sliding surface, any parts of the frame arranged at a height that is intermediate between the position of the sliding surface and the cutting means.

The impacts of the crops against parts of the frame of the row assemblies cause a shaking of the crops which, because of the dry state in which the crops are at harvest time, causes said crops to release seeds, leaves or other parts which are intended for harvesting and which, because of this, are scattered on the ground, with a production loss.

The aim of the present invention is to provide a head row assembly for machines for harvesting crops in a field, that is capable of improving the background art in one or more of the above mentioned aspects.

Within the scope of this aim, an object of the invention is to provide a head row assembly for a machine for harvesting crops in a field that is capable of ensuring lower production losses than the background art.

Another object of the invention is to provide a head row assembly for a machine for harvesting crops in a field that allows to avoid the possibility that impacts of the crops against parts of the frame of the row assembly may occur.

Another object of the invention is to provide a head row assembly for a machine for harvesting crops in a field that allows to maximize the efficiency of the harvesting of the crops, reducing to a minimum the crop parts left in the field after harvesting.

Another object of the present invention is to provide a head row assembly for a machine for harvesting crops in a field that is capable of giving the greatest assurances of reliability and safety in operation.

Another object of the invention is to overcome the drawbacks of the background art in a manner that is alternative to any existing solutions.

Another object of the invention is to provide a head row assembly for a machine for harvesting crops in a field that can be obtained easily at low costs so as to be competitive also from a purely economic standpoint.

This aim and these and other objects which will become better apparent hereinafter are achieved by a head row assembly for a machine for harvesting crops in a field according to claim 1, optionally provided with one or more of the characteristics of the dependent claims.

Further characteristics and advantages of the invention will become better apparent from the description of a preferred but not exclusive embodiment of the head row assembly for a machine for harvesting crops in a field according to the invention, illustrated by way of non-limiting example in the accompanying drawings, wherein:

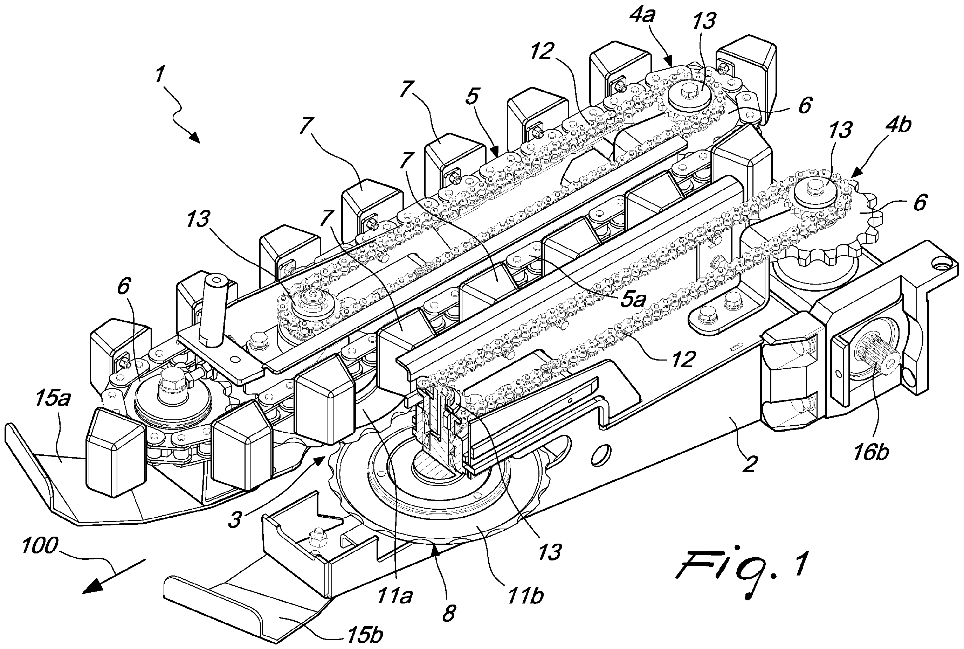

Figure 1 is a partially cutout perspective view of the row assembly according to the invention, with parts omitted for the sake of simplicity;

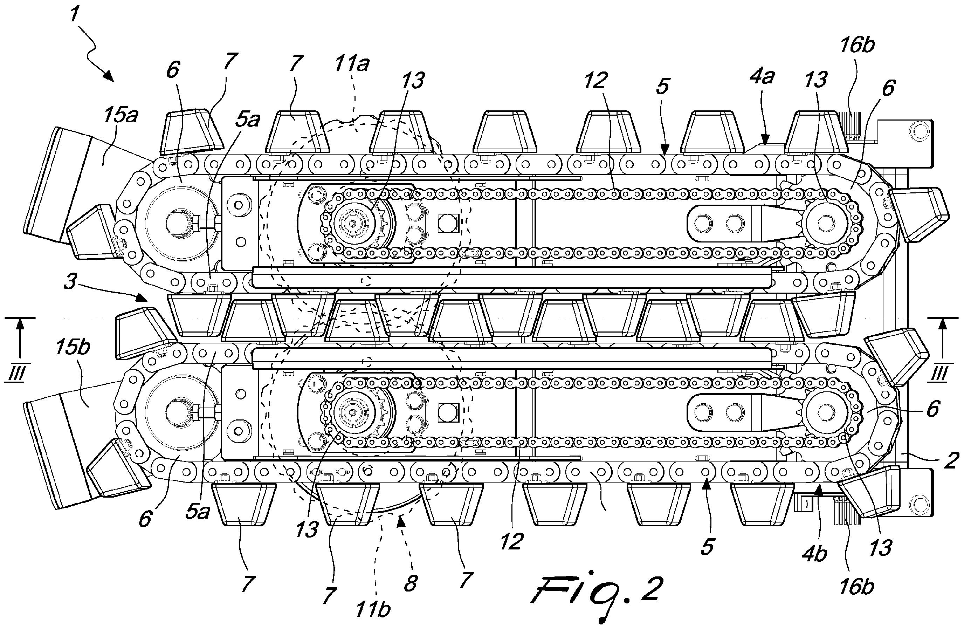

Figure 2 is a top plan view of the row assembly according to the invention;

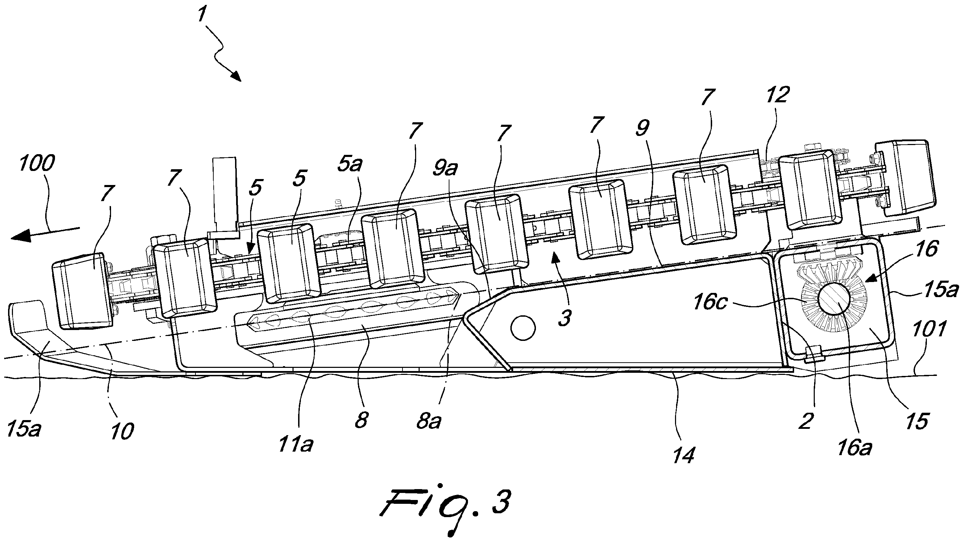

Figure 3 is a sectional view, taken along the plane III-III of Figure 2;

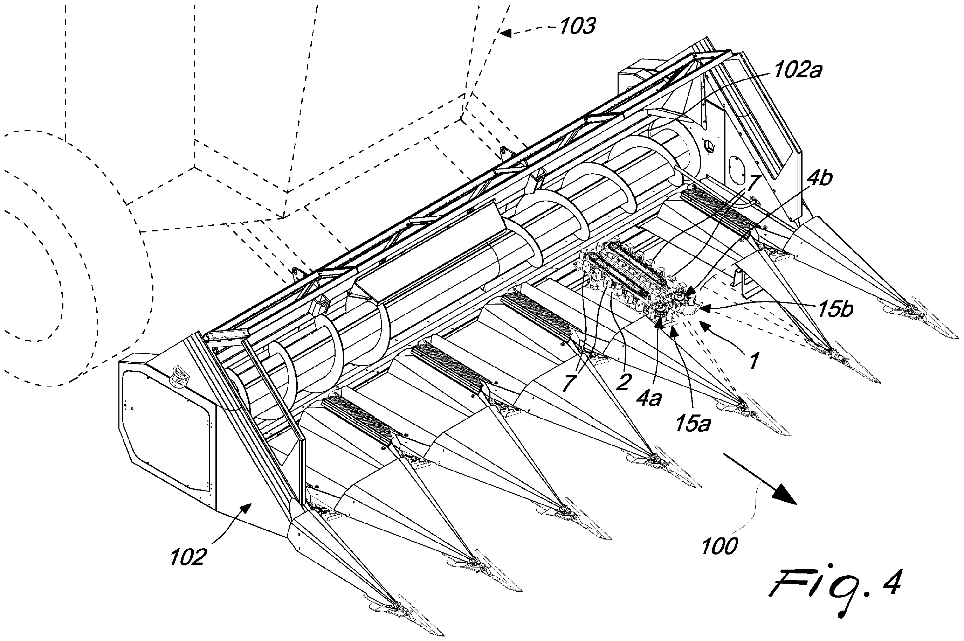

Figure 4 is a perspective view, partially in phantom lines, of a head associated with a machine for harvesting crops in a field in order to highlight a row assembly according to the invention connected thereto.

With reference to the cited figures, the head row assembly for a machine for harvesting crops in a field, according to the invention, generally designated by the reference numeral 1, comprises a frame 2 designed to be connected to a head 102 which is associated with the front part of a machine for harvesting crops in a field 103, which can move on the ground 101 along an advancement direction 100.

The frame 2 forms at least one longitudinally extended passage 3, which extends substantially parallel to the advancement direction 100 and is designed to receive the crops along a corresponding row during the advancement of the machine 103.

In particular, the passage 3 has, conveniently, a longitudinal intake end for the crops which is directed toward the front part of the frame 2, along the advancement direction of the machine 103, and a longitudinal output end for the crops, which is opposite with respect to the longitudinal intake end, which is arranged in communication with a conveyance channel 102a of the harvested crops formed in the head 102.

Along the opposite longitudinal edges of the passage 3 there are respective conveyor elements 4a and 4b, which are adapted to move the crops that have entered the passage 3 in the opposite direction with respect to the advancement path of the machine 103 along the advancement direction 100.

In particular, each one of the conveyor elements 4a and 4b is, for example, constituted by a respective flexible elongated element 5 having a closed extension, such as a chain or the like, which runs continuously between two respective sprockets 6, at least one of which is a driving sprocket, so as to define an active portion 5a of the flexible elongated element 5 which extends along a respective longitudinal edge of the passage 3.

Conveniently, in order to increase the retention of the crops by the conveyor elements 4a, 4b, each flexible elongated element 5 has, along its extension, a plurality of teeth 7, which are mutually spaced and offset, with respect to the teeth 7 of the other flexible elongated element 5, so that along the active portions 5a of the flexible elongated elements 5 the teeth 7 of one flexible elongated element 5 are arranged between two consecutive teeth 7 of the other flexible elongated element 5.

Along the passage 3 there are, furthermore, cutting means 8, which have the function of cutting the crops along at least one cutting plane 8a.

Also along the passage 3, downstream of the cutting means 8, along the direction of motion imparted to the crops by the conveyor elements 4a and 4b, on the frame 2 there is a sliding surface 9 which can be engaged slidingly by the crops entrained by the conveyor elements 4a and 4b in order to avoid their downward fall after their cutting.

According to the invention, the cutting plane 8a and the sliding surface 9 both lie substantially on a same plane of arrangement 10.

In this manner, one avoids the risk that during the movement of the crops along the passage 3, under the thrust of the conveyor elements 4a and 4b, from the cutting means 8 to the sliding surface 9, the crops might strike parts of the frame 2, with the risk that the crops might release parts intended to be harvested, which otherwise would be dispersed on the ground.

Advantageously, the plane of arrangement 10 on which the cutting plane 8a and the sliding surface 9 lie is arranged so as to be inclined upward, with respect to the ground 101, proceeding along the direction of motion imparted to the crops by the conveyor elements 4a, 4b.

Preferably, the angle of inclination of the plane of arrangement 10 with respect to the ground 101 is substantially comprised between 6° and 10° and, more preferably, is substantially equal to approximately 8°.

Advantageously, the frame 2 forms, furthermore, at the end of the sliding surface 9 that is directed toward the cutting means, a guiding surface 9a, which is inclined with respect to said sliding surface and extends below the plane of arrangement 10, in a region of space comprised between the cutting means 8 and the sliding surface 9, with a rising direction toward the sliding surface 9, proceeding along the direction of motion imparted to the crops by the conveyor elements 4a and 4b, so as to avoid a sudden passage of the crops exiting from the cutting means 8 to the sliding surface 9.

Conveniently, the cutting means 8 are arranged in a position that is proximate to the ground 101 and more particularly are conveniently arranged at a height close to the ground 101, substantially comprised between 30 and 70 mm and more preferably between 48 and 52 mm.

In this manner, the cutting means 8 are capable of cutting the crops on a cutting plane 8a that almost skims the ground 101.

As shown, the cutting means 8 are conveniently provided by means of a pair of cutting discs 11a and 11b, which are mounted so that they can rotate on the frame 2, about respective axes which are mutually substantially parallel and substantially perpendicular to the plane of arrangement 10.

In particular, the cutting discs 11a, 11b are mutually superimposed with at least one portion thereof located at the passage.

In this case, the cutting plane 8a provided by the cutting discs 11a and 11b is formed in the region of mutual overlap between the two cutting discs 11a and 11b, which is located substantially at the same shallow height with respect to the ground 101.

Advantageously, at least one of the cutting discs 11a, 11b can be arranged substantially in the plane of arrangement 10.

Conveniently, the rotational actuation of the cutting discs 11a and 11b can be provided, as per se known, by virtue of a transmission of motion from each one of the conveyor elements 4a and 4b to the cutting disc 11a, 11b arranged on the same side of the passage 3.

More particularly, each one of the cutting discs 11a and 11b is conveniently rotated about the corresponding axis by a respective flexible motion transmission element 12, such as for example a chain or the like, which is closed in a loop around a pair of driving pulleys 13, one of which is arranged coaxially and integrally in rotation with a respective cutting disc 11a, 11b and the other one is arranged, instead, coaxially and integrally in rotation with the sprocket 6 that drives the conveyor element 4a, 4b arranged in the same position with respect to the passage 3.

Conveniently, the frame 2 forms in its lower part at least one surface 14 for contacting the ground, which is structured so as to allow the frame 2 to slide on the ground 101 during the advancement motion of the machine 103, thus ensuring that the cutting means 8 are kept in a position close to said ground.

Advantageously, at least one accommodation compartment 15 is formed in the frame 2, between the plane of arrangement 10 and the resting surface 14, and extends substantially transversely to the advancement direction 100 and is adapted to accommodate motion transmission elements 16 which are functionally connected to the conveyor elements 4a, 4b and/or to said cutting means 8.

More particularly, said accommodation compartment 15 is provided for example by a tubular body 15a, conveniently having a polygonal cross-section, and is conveniently arranged in the rear part of the frame 2, along the advancement direction of the machine 103.

The motion transmission element 16 comprise, conveniently, a transmission shaft 16a, which extends axially along the accommodation compartment 15 and is provided advantageously at at least one of its ends with a toothed coupling 16b, which is accessible from outside the frame 2, in order to allow its connection to a source of motion of the machine 103 or to the toothed coupling 16b of an adjacent row assembly.

The toothed coupling is functionally connected, for example by means of a bevel gear coupling 16c, to the driving sprocket 6 of the conveyor elements 4a and 4b, corresponding, in practice, in the embodiment shown, to the sprocket of the two sprockets 6 that is arranged in the rear part of the frame 2 along the direction of advancement of the machine 103.

It should be noted that preferably two sliders 15a and 15b for resting on the ground 101 can protrude frontally from the frame 2, are arranged on mutually opposite sides of the frame 2, are provided with a free front end which is curved upward, and allow to facilitate the sliding of the frame 2 on the ground 101 and its lateral stability during its motion in the advancement direction 100.

The operation of the row assembly according to the invention is as follows.

During the advancement motion of the machine 103 in the advancement direction 100, the crops of a corresponding row enter the passage 3 and are entrained by the conveyor elements 4a and 4b in the opposite direction with respect to the advancement direction of the machine 103, undergoing at the cutting means 8 a cutting of the corresponding stem in a position proximate to the ground 101, by virtue of the particular position of the cutting means 8 close to the ground, thus minimizing the part of the crop left on the field.

The crops thus cut, continuing in their motion along the conveyor elements 4a, 4b, engage slidingly, with the lower part of their stem, the guiding surface 9a so as to reach, without being subjected to impacts, the sliding surface 9, on which they slide until they reach the exit end of the passage 3.

In practice it has been found that the invention achieves the intended aim and objects, providing a row assembly which, by virtue of the arrangement of the cutting plane and of the sliding surface of the crops on a same plane of arrangement, allows to avoid shaking the crops during their motion along the passage of the row assembly, with consequent lower production losses than the background art.

The invention thus conceived is susceptible of numerous modifications and variations. The scope of the invention is defined by the accompanying claims.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A head row assembly for a machine for harvesting crops in a field, comprising a frame (2) designed to be connected to a head (102) associated with the front part of a machine for harvesting crops in a field (103), which can move on the ground (101) along an advancement direction (100), said frame (2) forming at least one longitudinally extended passage (3), which extends substantially parallel to said advancement direction (100) and is designed to receive the crops along a corresponding row during the advancement of the machine (103), along the opposite longitudinal edges of said passage (3) there being respective conveyor elements (4a, 4b) which are adapted to move the crops in the opposite direction with respect to the advancement direction of the machine (103), along said passage (3) there being cutting means (8), adapted to cut the crops along at least one cutting plane (8a), said frame (2) forming, downstream of said cutting means (8), along the direction of motion imparted to the crops by said conveyor elements (4a, 4b), a sliding surface (9) for the crops, which can be engaged slidingly by the crops entrained by said conveyor elements (4a, 4b), **characterized in that** said cutting plane (8a) and said sliding surface (9) lie substantially on a same plane of arrangement (10).

2. The row assembly according to claim 1, **characterized in that** said plane of arrangement (10) is arranged so as to be inclined upward, proceeding along the direction of motion imparted to the crops by said conveyor elements (4a, 4b), with respect to the ground (101).

3. The row assembly according to one or more of the preceding claims, **characterized in that** said plane of arrangement (10) is inclined with respect to the ground (101) by an angle comprised between 6° and 10°.

4. The row assembly according to one or more of the preceding claims, **characterized in that** said cutting means (8) are arranged in a position that is proximate to the ground.

5. The row assembly according to one or more of the preceding claims, **characterized in that** said cutting means (8) are arranged with respect to the ground at a distance comprised between 30 and 70 mm.

6. The row assembly according to one or more of the preceding claims, **characterized in that** said cutting means (8) comprise a pair of cutting discs (11a, 11b), which are mounted so that they can rotate on said frame (2), about respective axes which are mutually substantially parallel and substantially perpendicular to said plane of arrangement (10), said cutting discs (11a, 11b) being mutually superimposed with at least one portion thereof located in said passage (3).

7. The row assembly according to one or more of the preceding claims, **characterized in that** at least one of said cutting discs (11a, 11b) is arranged substantially on said plane of arrangement (10).

8. The row assembly according to one or more of the preceding claims, **characterized in that** said frame (2) forms in a lower region at least one surface (14) for contacting the ground (101).

9. The row assembly according to one or more of the preceding claims, **characterized in that** said frame (2) forms, between said plane of arrangement (10) and said at least one resting surface (14), at least one accommodation compartment (15), which extends substantially transversely to said advancement direction (100) and is adapted to accommodate motion transmission elements (16) which are functionally connected to said conveyor elements (4a, 4b) and/or to said cutting means (11a, 11b).

10. The row assembly according to one or more of the preceding claims, **characterized in that** said frame (2) forms, at the end of said sliding surface (9) that is directed toward said cutting means (8), a guiding surface (9a), which is inclined with respect to said sliding surface (9) and extends below said plane of arrangement (10) and rises toward said sliding surface (9).

## Patentansprüche

1. Eine Kopfreihenanordnung für eine Maschine zum Ernten von Erntegut auf einem Feld, die einen Rahmen (2) umfasst, konstruiert, um mit einem Kopf (102) verbunden zu werden, welcher mit dem vorderen Teil einer Maschine zum Ernten von Erntegut auf einem Feld (103) verbunden ist, die sich entlang einer Vorschubrichtung (100) auf dem Boden (101) bewegen kann; wobei der Rahmen (2) mindestens eine sich in Längsrichtung erstreckende Passage (3) bildet, die sich im Wesentlichen parallel zu der Vorschubrichtung (100) erstreckt und konstruiert ist, um das Erntegut entlang einer entsprechenden Reihe während des Vorschubs der Maschine (103) aufzunehmen; wobei sich entlang den gegenüberliegenden Längskanten der Passage (3) entsprechende Förderelemente (4a, 4b) befinden, die ausgebildet sind, um das Erntegut in die der Vorschubrichtung der Maschine (103) entgegengesetzte Richtung zu bewegen; wobei sich entlang der Passage (3) Schneidemittel (8) befinden, ausgebildet, um das Erntegut entlang mindestens einer Schneidebene (8a) zu schneiden; wobei der Rahmen (2) stromabwärts von den Schneidemitteln (8), entlang der Bewegungsrichtung, die dem Erntegut von den Förderelementen (4a, 4b) verliehen wird, eine Gleitfläche (9) für das Erntegut ausbildet, welche in gleitendem Eingriff mit dem Erntegut stehen kann, das von den Förderelementen (4a, 4b) transportiert wird; **dadurch gekennzeichnet, dass** die Schneidebene (8a) und die Gleitfläche (9) im Wesentlichen auf einer selben Anordnungsebene (10) liegen.

2. Die Reihenanordnung gemäß Anspruch 1, **dadurch gekennzeichnet, dass** die Anordnungsebene (10) schräg aufsteigend angeordnet ist, fortschreitend entlang der Bewegungsrichtung, die dem Erntegut von den Förderelementen (4a, 4b) verliehen wird, mit Bezug auf den Boden (101).

3. Die Reihenanordnung gemäß einem oder mehreren der obigen Ansprüche, **dadurch gekennzeichnet, dass** die Anordnungsebene (10) mit Bezug auf den Boden (101) in einem Winkel zwischen 6° und 10° geneigt ist.

4. Die Reihenanordnung gemäß einem oder mehreren der obigen Ansprüche, **dadurch gekennzeichnet, dass** die Schneidemittel (8) in einer Position nahe dem Boden angeordnet sind.

5. Die Reihenanordnung gemäß einem oder mehreren der obigen Ansprüche, **dadurch gekennzeichnet, dass** die Schneidemittel (8) mit Bezug auf den Boden in einem Abstand zwischen 30 und 70 mm angeordnet sind.

6. Die Reihenanordnung gemäß einem oder mehreren der obigen Ansprüche, **dadurch gekennzeichnet, dass** die Schneidemittel (8) ein Paar von Schneidscheiben (11a, 11b) umfassen, die drehbar um entsprechende Achsen, die im Wesentlichen zueinander parallel und im Wesentlichen senkrecht zu der Anordnungsebene (10) sind, an dem Rahmen (2) montiert sind; wobei die Schneidscheiben (11a, 11b) übereinanderliegen, wobei mindestens ein Teil davon in der Passage (3) positioniert ist.

7. Die Reihenanordnung gemäß einem oder mehreren der obigen Ansprüche, **dadurch gekennzeichnet, dass** mindestens eine der Schneidscheiben (11a, 11b) im Wesentlichen auf der Anordnungsebene (10) angeordnet ist.

8. Die Reihenanordnung gemäß einem oder mehreren der obigen Ansprüche, **dadurch gekennzeichnet, dass** der Rahmen (2) in einem unteren Bereich mindestens eine Oberfläche (14) für Kontakt mit dem Boden (101) ausbildet.

9. Die Reihenanordnung gemäß einem oder mehreren der obigen Ansprüche, **dadurch gekennzeichnet, dass** der Rahmen (2) zwischen der Anordnungsebene (10) und der mindestens einen Bodenkontaktfläche (14) mindestens einen Aufnahmehohlraum (15) bildet, der sich im Wesentlichen quer zu der Vorschubrichtung (100) erstreckt und ausgebildet ist, um Bewegungsübertragungselemente (16) aufzunehmen, welche funktionell mit den Förderelementen (4a, 4b) und/oder mit den Schneidemitteln (11a, 11b) verbunden sind.

10. Die Reihenanordnung gemäß einem oder mehreren der obigen Ansprüche, **dadurch gekennzeichnet, dass** der Rahmen (2) am Ende der Gleitfläche (9), die den Schneidemitteln (8) zugewandt ist, eine Führungsfläche (9a) ausbildet, die mit Bezug auf die Gleitfläche (9) geneigt ist und sich unterhalb der Anordnungsebene (10) erstreckt und zu der Gleitfläche (9) hin ansteigt.

## Revendications

1. Ensemble de rang de tête pour machine de récolte de cultures dans un champ, comprenant un cadre (2) conçu pour être relié à une tête (102) associée à la partie avant d'une machine pour récolter des cultures dans un champ (103), qui peut se déplacer sur le sol (101) le long d'une direction d'avance (100), ledit cadre (2) formant au moins un passage (3) étendu longitudinalement, qui s'étend sensiblement parallèle à ladite direction d'avance (100) et est conçu pour recevoir les cultures le long d'un rang correspondant pendant l'avance de la machine (103), le long des bords longitudinaux opposés dudit passage (3) se trouvant des éléments de convoyeur (4a, 4b) respectifs qui sont adaptés pour déplacer les cultures dans la direction opposée par rapport à la direction d'avance de la machine (103), le long dudit passage (3) se trouvant des moyens de coupe (8), adaptés pour couper les cultures le long d'au moins un plan de coupe (8a), ledit cadre (2) formant, en aval desdits moyens de coupe (8), le long de la direction de déplacement imprimée aux cultures par lesdits éléments de convoyeur (4a, 4b), une surface de glissement (9) pour les cultures, sur laquelle les cultures entrainées par lesdits éléments de convoyeur (4a, 4b) peuvent glisser, **caractérisé en ce que** ledit plan de coupe (8a) et ladite surface de glissement (9) se situent sensiblement sur un même plan d'agencement (10).

2. Ensemble de rang selon la revendication 1, **caractérisé en ce que** ledit plan d'agencement (10) est agencé de façon à être incliné vers le haut, le long de la direction de déplacement imprimée aux cultures par lesdits éléments de convoyeur (4a, 4b), par rapport au sol (101).

3. Ensemble de rang selon une ou plusieurs des revendications précédentes, **caractérisé en ce que** ledit plan d'agencement (10) est incliné par rapport au sol (101) d'un angle compris entre 6° et 10°.

4. Ensemble de rang selon une ou plusieurs des revendications précédentes, **caractérisé en ce que** lesdits moyens de coupe (8) sont agencés dans une position qui est proche du sol.

5. Ensemble de rang selon une ou plusieurs des revendications précédentes, **caractérisé en ce que** lesdits moyens de coupe (8) sont agencés par rapport au sol à une distance comprise entre 30 et 70 mm.

6. Ensemble de rang selon une ou plusieurs des revendications précédentes, **caractérisé en ce que** lesdits moyens de coupe (8) comprennent une paire de disques de coupe (11a, 11b), qui sont montés de telle manière qu'ils peuvent tourner sur ledit cadre (2), autour d'axes respectifs qui sont mutuellement sensiblement parallèles et sensiblement perpendiculaire audit plan d'agencement (10), lesdits disques de coupe (11a, 11b) étant mutuellement superposés avec au moins une partie de ceux-ci situés dans ledit passage (3).

7. Ensemble de rang selon une ou plusieurs des revendications précédentes, **caractérisé en ce qu'**au moins un desdits disques de coupe (11a, 11b) est agencé sensiblement sur ledit plan d'agencement (10).

8. Ensemble de rang selon une ou plusieurs des revendications précédentes, **caractérisé en ce que** ledit cadre (2) forme dans une région inférieure au moins une surface (14) pour entrer en contact avec le sol (101).

9. Ensemble de rang selon une ou plusieurs des revendications précédentes, **caractérisé en ce que** ledit cadre (2) forme, entre ledit plan d'agencement (10) et ladite au moins une surface de repos (14), au moins un compartiment de logement (15), qui s'étend sensiblement transversalement à ladite direction d'avance (100) et est adapté pour loger des éléments de transmission de mouvement (16) qui sont connectés fonctionnellement auxdits éléments de convoyeur (4a, 4b) et/ou auxdits moyens de coupe (11a, 11b).

10. Ensemble de rang selon une ou plusieurs des revendications précédentes, **caractérisé en ce que** ledit cadre (2) forme, à l'extrémité de ladite surface de glissement (9) qui est dirigée vers lesdits moyens de coupe (8), une surface de guidage (9a), qui est inclinée par rapport à ladite surface de glissement (9) et s'étend au-dessous dudit plan d'agencement (10) et monte vers ladite surface de glissement (9).
